# EUROPÄISCHE PATENTANMELDUNG

(11) **EP 4 462 309 A1**
(43) Veröffentlichungstag der Anmeldung: **13.11.2024**
(21) Anmeldenummer: 23172387.5
(22) Anmeldetag: 09.05.2023
(51) Int. Cl.: G06N 3/0455, G06N 3/0475, G06N 3/0895

(54) **ROBUSTERE AUSWERTUNG VON MESSDATEN MIT MACHINE LEARNING-MODELLEN**

(71) Anmelder: Robert Bosch GmbH, 70442 Stuttgart (DE)
(72) Erfinder: Schwinn, Leo, 75233 Tiefenbronn (DE); Hutmacher, Robin, 71272 Renningen (DE)

(57) **Zusammenfassung**

Verfahren (100) zur Auswertung eines Records (2) von Messdaten im Hinblick auf eine vorgegebene Aufgabe mit einem Machine Learning-Modell, Task-Modell (1), mit den Schritten:
• der Record (2) von Messdaten wird von einem trainierten generativen Machine Learning-Modell (3) zu einer Abwandlung (2') verarbeitet (110), wobei das generative Machine Learning-Modell (3) über einen Parametervektor (3a) so gesteuert wird, dass die Abwandlung (2')
∘ der Domäne und/oder Verteilung derjenigen Eingabe-Daten angehört, auf deren Verarbeitung das Task-Modell (1) trainiert ist, und
∘ denjenigen Aspekt des Records von Messdaten (2), auf den sich die vorgegebene Aufgabe bezieht, unverändert lässt;

• die Abwandlung (2') wird von dem Task-Modell (1) zu einer Ausgabe (4) im Hinblick auf die vorgegebene Aufgabe verarbeitet (120);
• diese Ausgabe (4) wird als Lösung (5) der vorgegebenen Aufgabe in Bezug auf den Record (2) von Messdaten gewertet (130).

## Beschreibung

Die vorliegende Erfindung betrifft die Auswertung von Messdaten, wie beispielsweise Bildern oder Punktwolken, die insbesondere bei der Umfeldüberwachung von Fahrzeugen anfallen.

### Stand der Technik

Für das zumindest teilweise automatisierte Führen von Fahrzeugen oder Robotern im Straßenverkehr oder auch auf Betriebsgeländen ist eine ständige Überwachung des Umfelds des Fahrzeugs bzw. Roboters unerlässlich. Eine solche Umfeldüberwachung sammelt Records von Messdaten, wie beispielsweise Bilder oder Punktwolken, und wertet diese Records mit einem trainierten Machine Learning-Modell im Hinblick auf eine vorgegebene Aufgabe (Task) aus. Im Folgenden wird das Machine Learning-Modell in diesem Kontext daher auch Task-Modell genannt. Die vorgegebene Aufgabe kann beispielsweise umfassen, die Typen von Objekten im Umfeld des Fahrzeugs bzw. Roboters zu klassifizieren.

Das Task-Modell wird typischerweise mit Trainings-Beispielen trainiert, die einer bestimmten Domäne bzw. Verteilung angehören oder eine solche Domäne bzw. Verteilung bilden. Innerhalb dieser Domäne bzw. Verteilung generalisiert das Task-Modell dann im Wirkbetrieb gut auf im Training ungesehene Records von Messdaten. Wenn diese Records jedoch die trainierte Domäne bzw. Verteilung verlassen, ist nicht mehr garantiert, dass das Task-Modell korrekte Ausgaben liefert. Das Verlassen der trainierten Domäne bzw. Verteilung kann beispielsweise durch eine Änderung der Licht- oder Wetterbedingungen, unter denen Bilder aufgenommen werden, verursacht werden.

### Offenbarung der Erfindung

Die Erfindung stellt ein Verfahren zur Auswertung eines Records von Messdaten im Hinblick auf eine vorgegebene Aufgabe bereit. Diese Auswertung erfolgt mit einem auf die Lösung der vorgegebenen Aufgabe (Task) trainierten Machine Learning-Modell, das daher im Folgenden Task-Modell genannt wird.

Hierbei bezeichnet der Begriff "Record" einen Datensatz zusammengehörender Daten, vergleichbar mit den Informationen auf einer Karteikarte in einem Karteikasten. Ein Record kann beispielsweise Werte mehrerer Messgrößen, die gemeinsam einen Betriebszustand eines technischen Systems charakterisieren, oder auch Bilddaten und ggfs. zugehörige Metadaten. Es wird hier der Begriff "Record" anstelle von "Datensatz" verwendet, da der Begriff "Datensatz" in der Fachsprache des Machine Learnings bereits anderweitig belegt ist und die Sammlung aller Records bezeichnet, vergleichbar mit dem Karteikasten, der alle Karteikarten enthält.

Der Begriff "Machine Learning-Modell" bezeichnet insbesondere beispielsweise ein Modell, das eine mit anpassbaren Parametern parametrierte Funktion mit großer Kraft zur Verallgemeinerung verkörpert. Die Parameter können beim Training eines Machine Learning-Modells insbesondere dergestalt angepasst werden, dass bei Eingabe von Trainingsdaten in das Modell die zu den Trainingsdaten zugehörigen Soll-Ausgaben möglichst gut reproduziert werden. Ein Machine Learning-Modell kann insbesondere ein künstliches neuronales Netzwerk, KNN, beinhalten, und/oder es kann ein KNN sein.

Der Record von Messdaten wird von einem vortrainierten generativen Machine Learning-Modell zu einer Abwandlung verarbeitet. Das generative Machine Learning-Modell kann insbesondere beispielsweise durch einen Parametervektor gesteuert werden, den das fertig trainierte Modell als Freiheitsgrad lässt, um zur Laufzeit die Verarbeitung des Records von Messdaten in eine gewünschte Richtung zu lenken. Wenn beispielsweise mit einem trainierten Diffusionsmodell (wie etwa "Stable Diffusion") eine Abwandlung eines Bildes erzeugt wird, lässt sich in Textform ein Bearbeitungshinweis dahingehend eingeben, in welcher Weise das Bild abgewandelt werden soll. Auf die Eingabe "Filzstiftzeichnung" entsteht eine Abwandlung, die einer Filzstiftzeichnung ähnlich ist, und auf die Eingabe "Ölgemälde" entsteht eine Abwandlung, die einem Ölgemälde ähnlich ist. Der eingegebene Text wird intern in einen Parametervektor kodiert, der dann wiederum auf die Verarbeitung des Bildes zu der Abwandlung wirkt.

Das generative Machine Learning-Modell wird über einen Parametervektor so gesteuert, dass die Abwandlung der Domäne und/oder Verteilung derjenigen Eingabe-Daten angehört, auf deren Verarbeitung das Task-Modell trainiert ist. Zugleich lässt die Abwandlung jedoch denjenigen Aspekt des Records von Messdaten, auf den sich die vorgegebene Aufgabe bezieht, unverändert. Wenn beispielsweise die vorgegebene Aufgabe die Klassifikation von Typen von Objekten in einem Bild ist, lässt die Abwandlung vorteilhaft die Konstellation von Typen von Objekten in dem Bild unverändert. Hierfür stellen unterschiedliche Typen generativer Machine Learning-Modelle jeweils ihren eigenen Mechanismus bereit, wie beispielsweise eine Konditionierung auf die Information, die in der Abwandlung erhalten bleiben soll.

Die Abwandlung wird von dem Task-Modell zu einer Ausgabe im Hinblick auf die vorgegebene Aufgabe verarbeitet. Diese Ausgabe wird als Lösung der vorgegebenen Aufgabe in Bezug auf den Record von Messdaten gewertet.

Es wurde erkannt, dass die Auswertung des Records von Messdaten auf diese Weise wesentlich robuster gemacht werden kann. Viele Vorverarbeitungstechniken für Records von Messdaten, wie beispielsweise Bilder, entfernen im Vorhinein bekannte Arten von Störungen (wie etwa Rauschen), die den Record aus der trainierten Domäne und/oder Verteilung hinaustreiben. Gemäß dem hier verfolgten Ansatz wird hingegen durch die Optimierung ermittelt, welche seiner vielen Fähigkeiten ein universell vortrainiertes generatives Machine Learning-Modell in einem konkreten Fall zur Anwendung bringen sollte, um Records von Messdaten für das Task-Modell besser verarbeitbar zu machen. Dies kann beispielsweise beinhalten, konkrete Verteilungsmerkmale subtraktiv zu unterdrücken bzw. additiv hervorzuheben.

Auf diese Weise kann beispielsweise der Anwendungsbereich eines Task-Modells, das auf einer bestimmten Domäne und/oder Verteilung trainiert worden ist, auf andere Domänen und/oder Verteilungen erweitert werden, ohne ein komplett neues Training durchführen zu müssen.

Beispielsweise kann ein Task-Modell für die Analyse von Verkehrssituationen an Bord eines Fahrzeugs in einer bestimmten Region A, in der Rechtsverkehr herrscht, trainiert worden sein. Wenn das Fahrzeug sich jetzt in eine Region B bewegt, in der Linksverkehr herrscht, passen die Verkehrssituationen nicht mehr in die Domäne und/oder Verteilung, auf der das Task-Modell ursprünglich trainiert wurde. Das generative Machine Learning-Modell lässt sich nun so steuern, dass es Bilder (oder andere Records), die sich auf Verkehrssituationen mit Linksverkehr beziehen, unter Beibehaltung des sonstigen semantischen Inhalts in den Rechtsverkehr transformiert. Das Task-Modell "sieht" also eine Situation im Rechtsverkehr, obwohl sich das Fahrzeug im Linksverkehr bewegt, und kann nach wie vor zutreffende Analysen liefern.

Umgekehrt lässt sich das Verfahren auch in das Training eines Task-Modells einbetten, um einen kleinen Datensatz von Trainings-Beispielen in der gewünschten Domäne und/oder Verteilung um weitere Trainings-Beispiele aus einer Domäne zu bereichern, in der sie zahlreicher verfügbar sind. Wenn das Task-Modell beispielsweise auf die Analyse von Verkehrssituationen im Linksverkehr trainiert werden soll, sind allein deshalb weniger Trainings-Beispiele verfügbar als für den Rechtsverkehr, weil es viel weniger Länder und Gebiete mit Linksverkehr gibt. Indem ein entsprechend gesteuertes generatives Machine Learning-Modell Bilder aus dem Rechtsverkehr in den Linksverkehr übersetzt, kann eine große Menge an Trainings-Beispielen aus dem Rechtsverkehr zum Training des Task-Modells auf der Domäne des Linksverkehrs herangezogen werden. Das bedeutet insbesondere, dass der Aufwand, der in das manuelle Labeln der Trainings-Beispiele im Rechtsverkehr investiert wurde, nicht noch einmal anfällt.

Selbstverständlich können auch viele einfachere Verbesserungen in gleicher Weise eingebracht werden, wie beispielsweise Entrauschen, Hervorheben von Kanten, Entfernen von Wettereinflüssen oder Beseitigung von Bewegungs- oder Defokusunschärfe.

In einer besonders vorteilhaften Ausgestaltung ist das generative Machine Learning-Modell ein Diffusionsmodell. Dieses Diffusionsmodell ist dazu ausgebildet, den Record von Messdaten, und/oder eine zuvor intern erzeugte Repräsentation dieses Records, durch Hinzufügen von Rauschen zu einem verrauschten Zwischenprodukt zu verarbeiten und aus diesem verrauschten Zwischenprodukt nach Maßgabe eines Parametervektors die Abwandlung zu erzeugen. Dabei entscheidet die Stärke des hinzugefügten Rauschens darüber, wieviel von dem ursprünglichen Record in der Abwandlung noch zu erkennen ist. Der Parametervektor ist der "Schlüssel" zur gewünschten Domäne und/oder Verteilung der Trainingsdaten des Task-Modells.

Alternativ kann als generatives Machine Learning-Modell auch ein Autoencoder genutzt werden. Ein solcher Autoencoder bildet den Record von Messdaten zunächst mit einem Encoder auf eine Repräsentation mit reduzierter Dimensionalität ab. Diese Repräsentation wird mit einem Parametervektor verrechnet. Aus dem Ergebnis dieses Verrechnens wird mit einem Decoder die Abwandlung erzeugt. Hierbei ist die Encoder-Decoder-Anordnung typischerweise so trainiert, dass der Decoder aus der Repräsentation mit reduzierter Dimensionalität den ursprünglichen Record von Messdaten wieder rekonstruiert. Insbesondere bewirkt die reduzierte Dimensionalität der Repräsentation, dass die Information aus dem ursprünglichen Record von Messdaten durch einen "Flaschenhals" gezwängt wird. Der Encoder muss lernen, nur das absolut Wesentliche an Information in die Repräsentation zu übernehmen. Der Decoder muss lernen, auch aus wenig Information den ursprünglichen Record möglichst gut zu rekonstruieren.

Der Parametervektor kann insbesondere beispielsweise additiv oder subtraktiv mit dem verrauschten Zwischenprodukt, bzw. mit der Repräsentation mit reduzierter Dimensionalität, verrechnet werden. Dies ist besonders einsichtig interpretierbar dahingehend, dass ein in dem Parametervektor verkörperter Effekt der Repräsentation hinzugefügt bzw. aus der Repräsentation entfernt wird. Wenn beispielsweise ein Bild als Record von Messdaten von der Domäne der bei Sonnenschein aufgenommenen Bilder in eine Abwandlung in der Domäne der bei Regenwetter aufgenommenen Bilder übersetzt wird, verkörpert der Parametervektor das Regenwetter.

Besonders vorteilhaft umfasst der Record von Messdaten ein zwei- oder dreidimensionales Bild, und/oder eine Punktwolke. Die Bilder können insbesondere beispielsweise Kamerabilder, Videobilder, Wärmebilder oder Ultraschallbilder sein. Radar-Daten und Lidar-Daten hingegen liegen meistens als Punktwolken von Orten vor, von denen Reflexe einer ausgesendeten Abfragestrahlung zu kommen scheinen. Ultraschall-Daten können ebenfalls als Punktwolken vorliegen.

Besonders vorteilhaft ist das Task-Modell darauf trainiert, Eingabe-Daten zu Klassifikations-Scores in Bezug auf eine oder mehrere Klassen, und/oder zu Regressionswerten einer oder mehrerer gesuchter Größen, zu verarbeiten. Dies sind insbesondere bei der Umfeldüberwachung von Fahrzeugen oder Robotern die am häufigsten benötigten Ergebnisse.

In einer weiteren besonders vorteilhaften Ausgestaltung wird aus der ermittelten Lösung der vorgegebenen Aufgabe ein Ansteuersignal ausgewertet. Ein Fahrzeug, ein Fahrassistenzsystem, ein Roboter, ein System zur Qualitätskontrolle, ein System zur Überwachung von Bereichen, und/oder ein System zur medizinischen Bildgebung, wird mit dem Ansteuersignal angesteuert. In diesem Kontext bewirkt die robustere Auswertung, dass die von dem jeweiligen technischen System in Reaktion auf das Ansteuersignal ausgeführte Reaktion mit hoher Wahrscheinlichkeit der durch den Record von Messdaten verkörperten Situation angemessen ist.

Wie zuvor erläutert, kann das generative Machine Learning-Modell über sein eigentliches Training hinaus mit einem Parametervektor gesteuert werden, um speziell Abwandlungen zu erzeugen, die in der Domäne und/oder Verteilung der Trainingsdaten des Task-Modells liegen. Das heißt, die eigentlichen Architekturparameter (wie etwa Gewichte des neuronalen Netzwerks) bleiben nach dem Training fest und müssen nicht erneut ermittelt werden. Der Parametervektor bezieht sich lediglich auf vorgegebene Freiheitsgrade des generativen Machine Learning-Modells, die im Sinne einer Schaffung von Flexibilität bewusst offen gelassen wurden. Beispielsweise wird beim bekannten "Stable Diffusion"-Modell zur Bildgenerierung eine textliche Arbeitsanweisung für die Bearbeitung eines konkreten Bildes in einen Parametervektor übersetzt, mit dem dann das trainierte Modell gesteuert wird. Daher stellt die Erfindung auch ein Verfahren zum Ermitteln eines Parametervektors zum Steuern eines generativen Machine Learning Modells bereit. Dieses Verfahren geht davon aus, dass das generative Machine Learning-Modell bereits zumindest teilweise darauf trainiert ist, einen Record von Messdaten, und/oder eine Repräsentation dieses Records, nach Maßgabe eines Parametervektors zu einer Abwandlung in einer vorgegebenen Domäne und/oder Verteilung zu verarbeiten.

Im Rahmen dieses Verfahrens werden ein oder mehrere Trainings-Records mit Daten bereitgestellt. Der Parametervektor wird initialisiert, beispielsweise mit zufällig gezogenen Werten für seine Komponenten oder auch mit einem früheren Parametervektor, der für eine gleiche oder ähnliche Situation optimiert wurde. Nach Maßgabe des nunmehr initialisierten Parametervektors werden die Trainings-Records von dem zu steuernden generativen Machine Learning-Modell zu Abwandlungen verarbeitet. Diese Abwandlungen wiederum werden mit dem Task-Modell zu Ausgaben in Bezug auf die vorgegebene Aufgabe verarbeitet. Das Verfahren zum Ermitteln des Parametervektors setzt also das Vorhandensein eines trainierten Task-Modells voraus, um dem generativen Machine Learning-Modell die Fähigkeit zu verleihen, Abwandlungen speziell in der am besten vom Task-Modell verarbeitbaren Domäne und/oder Verteilung zu erzeugen.

Aus den vom Task-Modell für die Abwandlungen gelieferten Ausgaben wird nach mindestens einem vorgegebenen Kriterium, d.h. anhand mindestens einer vorgegebenen Funktionsvorschrift, eine Bewertungszahl ausgewertet. Der Parametervektor wird auf das Ziel optimiert, dass bei weiterer Verarbeitung von Trainings-Records die Bewertungszahl verbessert wird. Hiermit wird ausgenutzt, dass die mit der Bewertungszahl gemessene Qualität der Ausgaben mit dem Grad korreliert ist, zu dem die vom generativen Machine Learning-Modell erzeugten Abwandlungen in die Domäne und/oder Verteilung der Trainingsdaten des Task-Modells passen. Wenn die Abwandlungen außerhalb dieser Domäne und/oder Verteilung liegen, ist damit zu rechnen, dass die Ausgaben in irgendeiner durch die Bewertungszahl detektierbaren Form schlechter werden. Wie die Güte der Ausgaben im Einzelnen bewertet wird, hängt insbesondere beispielsweise auch von der Art der zur Verfügung stehenden Trainings-Records ab.

Das Task-Modell kann sich prinzipiell auf jede Auswertungsaufgabe beziehen, die an Records von Messdaten abgearbeitet werden kann. Besonders vorteilhaft wendet das Task-Netzwerk ausschließlich differenzierbare Operationen auf die ihm zugeführten Eingabe-Daten an. Dann können für die Optimierung des Parametervektors, bei der eine Ausgabe des Task-Modells durch das Task-Modell und das zu steuernde generative Machine Learning-Modell hin zu den Parametern im Parametervektor zurückzupropagieren ist, gradientenbasierte Verfahren zum Einsatz kommen. Führt die Rückpropagation an irgendeiner Stelle über eine nicht differenzierbare Operation, können nur noch gradientenfreie Optimierungsverfahren genutzt werden.

In einer besonders vorteilhaften Ausgestaltung werden Trainings-Records gewählt, die mit Soll-Ausgaben in Bezug auf die vorgegebene Aufgabe annotiert (gelabelt) sind. Die Bewertungszahl misst mindestens eine Übereinstimmung der vom Task-Modell gelieferten Ausgaben mit den jeweiligen Soll-Ausgaben der Trainings-Records. Die Bewertungszahl liefert dann eine summarische Bewertung über den Satz von Trainings-Records. Der optimierte Parametervektor vermag das generative Machine Learning-Modell so zu steuern, dass jeder Record aus der durch die Trainings-Records definierten Domäne und/oder Verteilung in eine Abwandlung in der gewünschten Domäne und/oder Verteilung der Trainingsdaten des Task-Modells überführt wird.

In einer weiteren besonders vorteilhaften Ausgestaltung werden aus ein und demselben Trainings-Record mehrere Abwandlungen und mehrere Ausgaben des Task-Modells erzeugt. Insbesondere bei einem Diffusionsmodell als generativem Machine Learning-Modell ist die Erzeugung einer Abwandlung nicht deterministisch, da der Trainings-Record, bzw. eine intern erzeugte Repräsentation desselben, ja mit zufällig gezogenem Rauschen beaufschlagt wird. Die Bewertungszahl misst nun mindestens, inwieweit diese mehreren, auf ein und denselben Trainings-Record zurückgehenden Ausgaben miteinander übereinstimmen. Hierhinter steckt der Gedanke, dass, wenn die Abwandlungen alle in der gewünschten Domäne und/oder Verteilung der Trainingsdaten des Task-Modells liegen, kleine Änderungen dieser Abwandlungen durch ihre nicht vollständig deterministische Erzeugung auch nur zu kleinen Änderungen in den Ausgaben des Task-Modells führen. Liegen die Abwandlungen hingegen vollständig außerhalb der Domäne und/oder Verteilung der Trainingsdaten des Task-Modells, führen auch kleine Änderungen der Abwandlungen zu großen und unvorhersehbaren Änderungen in den Ausgaben des Task-Modells.

Der auf diese Weise erzeugte Parametervektor ist für den Trainings-Record spezifisch. Das heißt, die erfolgte Optimierung sagt nur aus, dass genau dieser Trainings-Record sich mit dem Parametervektor in die Domäne und/oder Verteilung der Trainingsdaten des Task-Modells überführen lässt. Bezüglich irgendwelcher anderer Trainings-Records wird keine Aussage getroffen.

Wird der Parametervektor in dieser Weise fertig optimiert, ist die am Ende erhaltene Ausgabe somit auch gleich das Ergebnis des zuvor beschriebenen Verfahrens. Wenn also ein Record von Messdaten zunächst als Trainings-Record verwendet wird, um den Parametervektor zu optimieren, kann die letzte im Rahmen der Optimierung gelieferte Ausgabe auch gleich als die Lösung der vorgegebenen Aufgabe in Bezug auf den Record von Messdaten gewertet werden.

Die spezifische Optimierung eines Parametervektors je Record von Messdaten bietet maximale Flexibilität und ermöglicht es insbesondere, unvorhersehbare Verschiebungen eines Records von Messdaten aus der Domäne und/oder Verteilung der Trainingsdaten des Task-Modells heraus abzufangen. Wenn also beispielsweise plötzlich die Linse einer Kamera, mit der das Fahrzeugumfeld überwacht wird, teilweise mit Schmutz oder Eis belegt ist und die Bildqualität beeinträchtigt wird, kann das generative Machine Learning-Modell so gesteuert werden, dass es den Effekt dieser Verschmutzung zumindest teilweise aus den Bildern herauskorrigiert. Das Task-Modell enthält also nach wie vor Bilder, in denen sich die Verschmutzung nicht, oder zumindest nicht wesentlich, bemerkbar macht, und kann diese nach wie vor störungsfrei auswerten.

Der Preis dafür ist, dass die Optimierung für jeden einzelnen Record von Messdaten Rechenzeit kostet und insofern die Latenzzeit bis zur Lieferung des Endergebnisses verlängert. Es hängt von der jeweiligen konkreten Anwendung ab, ob die verbesserte Robustheit auch gegen unvorhersehbare Domänen-Verschiebungen der Records von Messdaten oder aber eine möglichst geringe Latenzzeit am wichtigsten ist.

In einer weiteren besonders vorteilhaften Ausgestaltung wird eine Vielzahl von Trainings-Records aus einer Domäne und/oder Verteilung, der die Messdaten angehören, gewählt. Insbesondere in Verbindung mit der Verwendung gelabelter Trainings-Records hat dies die Wirkung, dass eine einzige Optimierung des Parametervektors ausreicht, um auch alle künftig noch aufgenommenen Records von Messdaten in die Domäne und/oder Verteilung der Trainingsdaten des Task-Modells zu überführen.

In einer weiteren besonders vorteilhaften Ausgestaltung wird aus dem optimierten Parametervektor eine semantische Bedeutung der durch diesen optimierten Parametervektor bewirkten Änderung in der Abwandlung ausgewertet. Auf diese Weise können Rückschlüsse auf eine Ursache gezogen werden, warum Records von Messdaten überhaupt aus der Domäne und/oder Verteilung der Trainingsdaten des Task-Modells hinaus geraten sind. Beispielsweise können bei einem Diffusionsmodell als generativem Machine Learning-Modell Bearbeitungshinweise in Textform ermittelt werden, die auf einen zu dem optimierten Parametervektor ähnlichen Parametervektor führen. Es ist dann wahrscheinlich, dass der optimierte Parametervektor einen ähnlichen Effekt auf die Bearbeitung der Abwandlung hat wie der Bearbeitungshinweis in Textform. Aus einem solchen Bearbeitungshinweis kann dann ein Hinweis auf die Ursache für die Domänenverschiebung abgeleitet werden. Wenn der Bearbeitungshinweise beispielsweise "Schmutz", "Eis", "Verunreinigung" oder "säubern" enthält, kann dies als Hinweis darauf gewertet werden, dass eine Verunreinigung der Kameralinse das eigentliche Grundproblem ist. Dieses Grundproblem kann dann einer Lösung zugeführt werden.

Die Verfahren können ganz oder teilweise computerimplementiert und somit in Software verkörpert sein. Daher bezieht sich die Erfindung auch auf ein oder mehrere Computerprogramme mit maschinenlesbaren Anweisungen, die, wenn sie auf einem oder mehreren Computern und/oder Compute-Instanzen ausgeführt werden, den oder die Computer und/oder Compute-Instanzen dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem einen oder den mehreren Computerprogrammen. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem einen oder den mehreren Computerprogrammen, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zur Auswertung eines Records 2 von Messdaten;
Figur 2 Veranschaulichung der Verarbeitung bei der Durchführung des Verfahrens 200;
Figur 3 Ausführungsbeispiel des Verfahrens 200 zum Ermitteln eines Parametervektors 3a zum Steuern eines generativen Machine Learning-Modells 3.

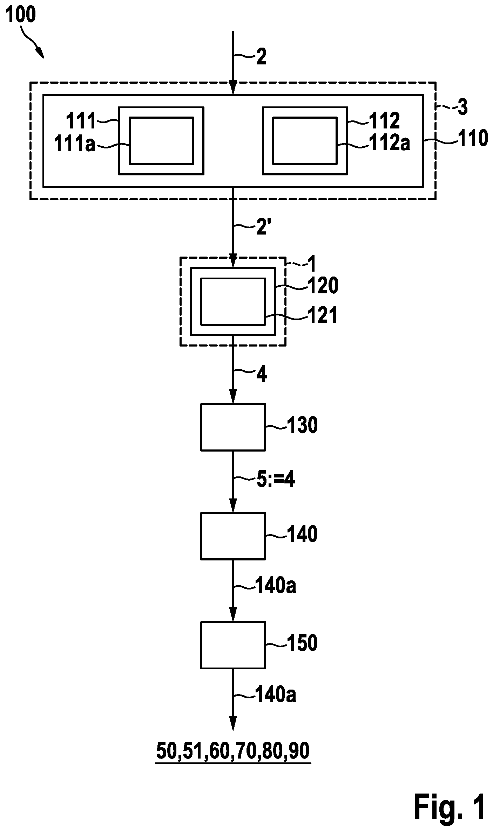

Figur 1 ist ein schematisches Ablaufdiagramm eines Ausführungsbeispiels des Verfahrens 100 zur Auswertung eines Records 2 von Messdaten im Hinblick auf eine vorgegebene Aufgabe (Task). Diese Auswertung wird mit einem trainierten Machine Learning-Modell 1 vorgenommen, das auf die Aufgabe (Task) bezogen ist und daher auch Task-Modell genannt wird. Zuvor wird der Record 2 vorverarbeitet.

Hierzu wird der Record 2 von Messdaten in Schritt 110 von einem vortrainierten generativen Machine Learning-Modell 3 zu einer Abwandlung 2' verarbeitet. Dabei wird das Machine Learning-Modell 3 speziell derart (beispielsweise mit einem Parametervektor, wie oben erläutert) gesteuert, so dass die Abwandlung 2' der Domäne und/oder Verteilung derjenigen Eingabe-Daten angehört, auf deren Verarbeitung das Task-Modell 1 trainiert ist, und zugleich denjenigen Aspekt des Records von Messdaten 2, auf den sich die vorgegebene Aufgabe bezieht, unverändert lässt.

Als generatives Machine Learning-Modell 3 kann gemäß Block 111 insbesondere beispielsweise ein Diffusionsmodell gewählt werden, welches dazu ausgebildet ist, den Record 2 von Messdaten, und/oder eine Repräsentation dieses Records 2, durch Hinzufügen von Rauschen zu einem verrauschten Zwischenprodukt zu verarbeiten und aus diesem verrauschten Zwischenprodukt nach Maßgabe eines Parametervektors 3a die Abwandlung 2' zu erzeugen.

Alternativ kann gemäß Block 112 ein Autoencoder als generatives Machine Learning-Modell 3 gewählt werden. Dieser Autoencoder ist dazu ausgebildet, den Record 2 von Messdaten auf eine Repräsentation mit reduzierter Dimensionalität abzubilden, diese Repräsentation mit einem Parametervektor 3a zu verrechnen und aus dem Ergebnis die Abwandlung 2' zu erzeugen.

Gemäß den Blöcken 111a bzw. 112a kann insbesondere beispielsweise der Parametervektor 3a additiv oder subtraktiv mit dem verrauschten Zwischenprodukt, bzw. mit der Repräsentation mit reduzierter Dimensionalität, verrechnet werden.

In Schritt 120 wird die Abwandlung 2' von dem Task-Modell 1 zu einer Ausgabe 4 im Hinblick auf die vorgegebene Aufgabe verarbeitet.

Gemäß Block 121 kann das Task-Modell 1 insbesondere beispielsweise darauf trainiert sein, Eingabe-Daten zu Klassifikations-Scores in Bezug auf eine oder mehrere Klassen, und/oder zu Regressionswerten einer oder mehrerer gesuchter Größen, zu verarbeiten.

In Schritt 130 wird die vom Task-Modell 1 gelieferte Ausgabe 4 als Lösung 5 der vorgegebenen Aufgabe in Bezug auf den Record 2 von Messdaten gewertet.

In Schritt 140 wird aus der ermittelten Lösung 5 der vorgegebenen Aufgabe ein Ansteuersignal 140a ausgewertet.

In Schritt 150 wird ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 140a angesteuert.

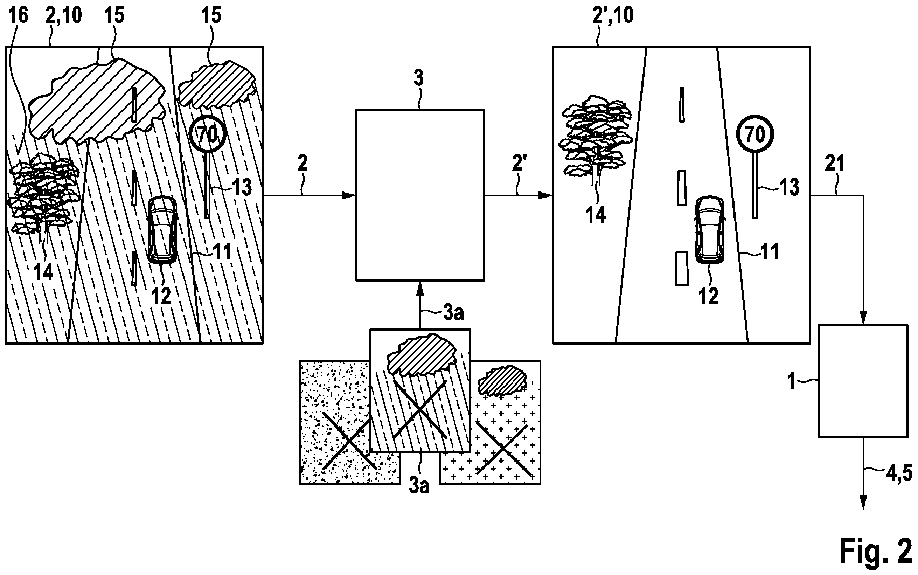

Figur 2 veranschaulicht die Verarbeitung eines beispielhaften Bildes einer Verkehrssituation 10 als Record 2 von Messdaten gemäß dem Verfahren 100.

Die Verkehrssituation 10 umfasst eine Straße 11 mit einem Fahrzeug 12, einem Verkehrszeichen 13 und einem Baum 14. Die Erkennbarkeit dieser Verkehrssituation 10 ist durch Wolken 15, aus denen Regen 16 fällt, deutlich verschlechtert.

Das Bild 2 wird daher dem generativen Machine Learning-Modell 3 zugeführt. Dieses wird mit einem Parametervektor 3a dahingehend gesteuert, dass es anhand des ursprünglichen Bildes 2 eine Abwandlung 2' in der Domäne und/oder Verteilung nicht durch besondere Wetterbedingungen oder andere Störungen beeinträchtigter Bilder neu erzeugt. Links und rechts von dem verwendeten Parametervektor 3a ist jeweils angedeutet, dass mit anderen Parametervektoren 3a auch verrauschte Bilder 2, bzw. durch Schneefall beeinträchtigte Bilder 2, in die gleiche Domäne und/oder Verteilung der ungestörten Bilder überführt werden können.

Die Abwandlung 2' in der Domäne und/oder Verteilung der ungestörten Bilder lässt die Verkehrssituation 10 viel klarer erkennen. Die Abwandlung 2' wird daher vom Task-Modell 1 zu der Ausgabe 4 verarbeitet, die zugleich die Lösung 5 der vorgegebenen Aufgabe ist.

Eine Nutzanwendung dieser Verarbeitung ist, dass das Task-Modell 1 nur auf die Verarbeitung ungestörter Bilder trainiert zu sein braucht. Es muss also beispielsweise ein und dieselbe Verkehrssituation 10 nicht in sehr vielen Varianten vorliegen, die sich in der Art und Stärke der vorhandenen Störungen voneinander unterscheiden. Dies kann insbesondere dann zum Problem werden, wenn bestimme Verkehrssituationen 10 in der Realität einfach zu selten vorkommen, um in so vielen Varianten erfasst zu werden.

Dies wiederum bedingt, dass ein gegebener Vorrat an Trainingsdaten insgesamt auch besser ausgenutzt werden kann. Wenn beispielsweise jeweils einige wenige Bilder ungestört, verrauscht, bei Regen aufgenommen bzw. bei Schnee aufgenommen sind, reicht diese Menge jeweils nicht aus, um das Task-Modell 1 hinreichend auf die Verarbeitung von Bildern mit der jeweiligen Störung zu trainieren. Wenn aber alle Trainingsdaten jeweils mit dem generativen Machine Learning-Modell 3 in die gemeinsame Domäne und/oder Verteilung der ungestörten Bilder überführt werden können, kann das Training des Task-Modells vollständig darauf fokussiert werden, die eigentliche Verkehrssituation 10 richtig zu analysieren. Hierfür ist der Gesamt-Vorrat an Trainingsdaten dann ausreichend.

Neben dem hier gezeigten Beispiel, das ein Stück weit als Domänentransfer angesehen werden kann, können Records von Messdaten, wie etwa Bilder, auch innerhalb einer Domäne verbessert werden. Hierzu können beliebige für die Lösung der Task förderliche Merkmale, wie etwa Kanten in einem Bild, hervorgehoben werden. Ebenso können für die Lösung der Task schädliche Merkmale, wie etwa Rauschen oder Unschärfe, entfernt werden.

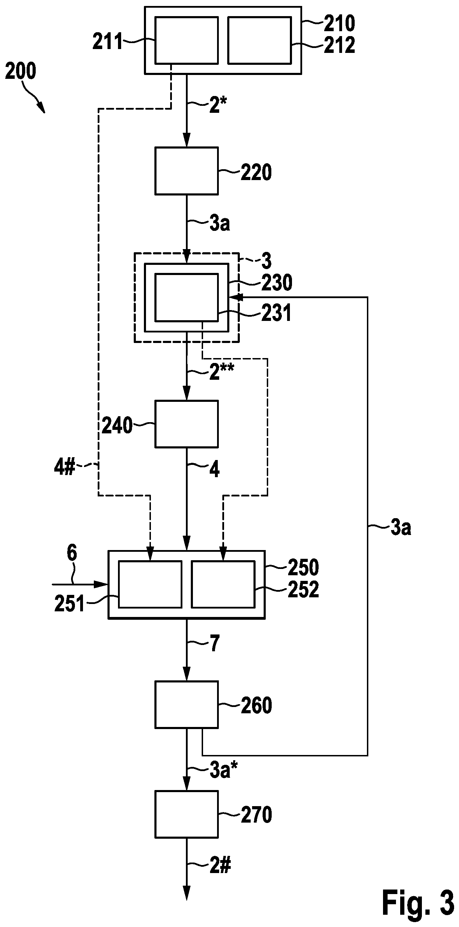

Figur 3 ist ein schematisches Ablaufdiagramm eines Ausführungsbeispiels des Verfahrens 200 zum Ermitteln eines Parametervektors 3a zum Steuern eines generativen Machine Learning-Modells 3. Dieses generative Machine Learning-Modell 3 ist zumindest teilweise darauf trainiert, einen Record 2 von Messdaten, und/oder eine Repräsentation dieses Records 2, nach Maßgabe eines Parametervektors 3a zu einer Abwandlung 2' in einer vorgegebenen Domäne und/oder Verteilung zu verarbeiten. Das Training hat dem generativen Machine Learning-Modell 3 die für die Verarbeitung nötigen Grundfertigkeiten verliehen. Beim Ermitteln des Parametervektors 3a gemäß dem Verfahren 200 geht es darum, in Form des Parametervektors 3a eine passende Arbeitsanweisung an das generative Machine Learning-Modell 3 zu finden, damit ein gewünschtes Ergebnis erhalten wird.

Dies schließt nicht aus, dass das Training des generativen Machine Learning-Modells 3 und das Auffinden des Parametervektors 3a zumindest teilweise miteinander kombiniert werden und beispielsweise gleichzeitig stattfinden. Das Zusammenfassen des Trainings mit dem Auffinden des Parametervektors 3a macht die Gesamtaufgabe jedoch deutlich komplexer. In den meisten Anwendungen führt es schneller zum Ziel, das generative Machine Learning-Modell 3 erst zu trainieren und dann den Parametervektor 3a zu suchen. Auch hat nicht jeder Nutzer, der das generative Machine Learning-Modell 3 zur Erzeugung von Abwandlungen 2' steuern möchte, auch die Trainingsdaten und Ressourcen für ein vollständiges Training.

Ebenso ist es möglich, beispielsweise das Task-Modell 1 zusammen mit dem generativen Machine Learning-Modell 3 zu trainieren.

In Schritt 210 des Verfahrens 200 werden ein oder mehrere Trainings-Records 2* bereitgestellt.

In Schritt 220 wird der Parametervektor 3a initialisiert, beispielsweise zufällig oder auf einen bereits früher gefundenen optimalen Parametervektor.

In Schritt 230 werden der oder die Trainings-Records 2* von dem zu steuernden generativen Machine Learning-Modell 3 nach Maßgabe des Parametervektors 3a zu Abwandlungen 2** verarbeitet.

In Schritt 240 werden die Abwandlungen 2** mit dem Task-Modell 1 zu Ausgaben 4 in Bezug auf die vorgegebene Aufgabe verarbeitet.

In Schritt 250 wird aus den Ausgaben 4 nach mindestens einem vorgegebenen Kriterium 6 eine Bewertungszahl 7 ausgewertet.

In Schritt 260 wird der Parametervektor 3a auf das Ziel optimiert, dass bei weiterer Verarbeitung von Trainings-Records 2* die Bewertungszahl 7 verbessert wird.

In Schritt 270 wird aus dem optimierten Parametervektor 3a* eine semantische Bedeutung 2# der durch diesen optimierten Parametervektor 3a* bewirkten Änderung in der Abwandlung 2** ausgewertet.

Gemäß Block 211 können Trainings-Records 2* gewählt werden, die mit Soll-Ausgaben 4# in Bezug auf die vorgegebene Aufgabe annotiert sind. Es kann dann gemäß Block 251 die Bewertungszahl 7 eine Übereinstimmung der vom Task-Modell 1 gelieferten Ausgaben 4 mit den jeweiligen Soll-Ausgaben 2# der Trainings-Records 2* messen.

Gemäß Block 212 kann insbesondere beispielsweise eine Vielzahl von Trainings-Records 2* aus einer Domäne und/oder Verteilung, der die Messdaten 2 angehören, gewählt werden.

Gemäß Block 231 können aus ein und demselben Trainings-Record 2* mehrere Abwandlungen 2** und mehrere Ausgaben 4 des Task-Modells 1 erzeugt werden. Es kann dann gemäß Block 252 die Bewertungszahl 7 messen, inwieweit diese mehreren Ausgaben 4 miteinander übereinstimmen.

## Patentansprüche

1. Verfahren (100) zur Auswertung eines Records (2) von Messdaten im Hinblick auf eine vorgegebene Aufgabe mit einem Machine Learning-Modell, Task-Modell (1), mit den Schritten:
• der Record (2) von Messdaten wird von einem trainierten generativen Machine Learning-Modell (3) zu einer Abwandlung (2') verarbeitet (110), wobei das generative Machine Learning-Modell (3) über einen Parametervektor (3a) so gesteuert wird, dass die Abwandlung (2')
∘ der Domäne und/oder Verteilung derjenigen Eingabe-Daten angehört, auf deren Verarbeitung das Task-Modell (1) trainiert ist, und
∘ denjenigen Aspekt des Records von Messdaten (2), auf den sich die vorgegebene Aufgabe bezieht, unverändert lässt;
• die Abwandlung (2') wird von dem Task-Modell (1) zu einer Ausgabe (4) im Hinblick auf die vorgegebene Aufgabe verarbeitet (120);
• diese Ausgabe (4) wird als Lösung (5) der vorgegebenen Aufgabe in Bezug auf den Record (2) von Messdaten gewertet (130).

2. Verfahren (100) nach Anspruch 1, wobei das generative Machine Learning-Modell (3) ein Diffusionsmodell ist (111), welches dazu ausgebildet ist, den Record (2) von Messdaten, und/oder eine Repräsentation dieses Records (2), durch Hinzufügen von Rauschen zu einem verrauschten Zwischenprodukt zu verarbeiten und aus diesem verrauschten Zwischenprodukt nach Maßgabe eines Parametervektors (3a) die Abwandlung (2') zu erzeugen.

3. Verfahren (100) nach Anspruch 1, wobei das generative Machine Learning-Modell (3) einen Autoencoder umfasst (112), der dazu ausgebildet ist,
• den Record (2) von Messdaten auf eine Repräsentation mit reduzierter Dimensionalität abzubilden,
• diese Repräsentation mit einem Parametervektor (3a) zu verrechnen und
• aus dem Ergebnis die Abwandlung (2') zu erzeugen.

4. Verfahren (100) nach einem der Ansprüche 2 bis 3, wobei der Parametervektor (3a) additiv oder subtraktiv mit dem verrauschten Zwischenprodukt, bzw. mit der Repräsentation mit reduzierter Dimensionalität, verrechnet wird (11 1a, 112a).

5. Verfahren (100) nach einem der Ansprüche 1 bis 4, wobei der Record (2) von Messdaten ein zwei- oder dreidimensionales Bild, und/oder eine Punktwolke, umfasst.

6. Verfahren (100) nach einem der Ansprüche 1 bis 5, wobei das Task-Modell (1) darauf trainiert ist (121), Eingabe-Daten zu Klassifikations-Scores in Bezug auf eine oder mehrere Klassen, und/oder zu Regressionswerten einer oder mehrerer gesuchter Größen, zu verarbeiten.

7. Verfahren (100) nach einem der Ansprüche 1 bis 6, wobei
• aus der ermittelten Lösung (5) der vorgegebenen Aufgabe ein Ansteuersignal (140a) ausgewertet wird (140) und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (140a) angesteuert wird (150).

8. Verfahren (200) zum Ermitteln eines Parametervektors (3a) zum Steuern eines generativen Machine Learning-Modells (3), welches dazu trainiert ist, einen Record (2) von Messdaten, und/oder eine Repräsentation dieses Records (2), nach Maßgabe eines Parametervektors (3a) zu einer Abwandlung (2') in einer vorgegebenen Domäne und/oder Verteilung zu verarbeiten, für den Einsatz in dem Verfahren (100) nach einem der Ansprüche 1 bis 7, mit den Schritten:
• es werden ein oder mehrere Trainings-Records (2*) bereitgestellt (210);
• der Parametervektor (3a) wird initialisiert (220);
• der oder die Trainings-Records (2*) werden von dem zu steuernden generativen Machine Learning-Modell (3) nach Maßgabe des Parametervektors (3a) zu Abwandlungen (2**) verarbeitet (230);
• die Abwandlungen (2**) werden mit dem Task-Modell (1) zu Ausgaben (4) in Bezug auf die vorgegebene Aufgabe verarbeitet (240);
• aus den Ausgaben (4) wird nach mindestens einem vorgegebenen Kriterium (6) eine Bewertungszahl (7) ausgewertet (250);
• der Parametervektor (3a) wird auf das Ziel optimiert (260), dass bei weiterer Verarbeitung von Trainings-Records (2*) die Bewertungszahl (7) verbessert wird.

9. Verfahren (200) nach Anspruch 8, wobei
• Trainings-Records (2*) gewählt werden (211), die mit Soll-Ausgaben (4#) in Bezug auf die vorgegebene Aufgabe annotiert sind, und
• die Bewertungszahl (7) eine Übereinstimmung der vom Task-Modell (1) gelieferten Ausgaben (4) mit den jeweiligen Soll-Ausgaben (2#) der Trainings-Records (2*) misst (251).

10. Verfahren (200) nach einem der Ansprüche 8 bis 9, wobei
• aus ein und demselben Trainings-Record (2*) mehrere Abwandlungen (2**) und mehrere Ausgaben (4) des Task-Modells (1) erzeugt werden (231) und
• die Bewertungszahl (7) misst (252), inwieweit diese mehreren Ausgaben (4) miteinander übereinstimmen.

11. Verfahren (200) nach einem der Ansprüche 8 bis 10, wobei eine Vielzahl von Trainings-Records (2*) aus einer Domäne und/oder Verteilung, der die Messdaten (2) angehören, gewählt wird (212).

12. Verfahren (200) nach einem der Ansprüche 8 bis 11, wobei aus dem optimierten Parametervektor (3a*) eine semantische Bedeutung (2#) der durch diesen optimierten Parametervektor (3a*) bewirkten Änderung in der Abwandlung (2**) ausgewertet wird (270).

13. Computerprogramm, enthaltend maschinenlesbare Anweisungen, die, wenn sie auf einem oder mehreren Computern und/oder Compute-Instanzen ausgeführt werden, den oder die Computer bzw. Compute-Instanzen dazu veranlassen, ein Verfahren (100, 200) nach einem der Ansprüche 1 bis 12 auszuführen.

14. Maschinenlesbarer Datenträger und/oder Downloadprodukt mit dem Computerprogramm nach Anspruch 13.

15. Ein oder mehrere Computer und/oder Compute-Instanzen mit dem Computerprogramm nach Anspruch 13, und/oder mit dem maschinenlesbaren Datenträger und/oder Downloadprodukt nach Anspruch 14.
